# EUROPEAN PATENT SPECIFICATION

(11) **EP 1 703 747 B1**
(45) Date of publication and mention of the grant of the patent: **18.05.2011**
(21) Application number: 05700400.4
(22) Date of filing: 07.01.2005
(51) Int. Cl.: H04W 4/06

(54) **A REGISTERING METHOD FOR MULTIMEDIA BROADCAST MULTICAST SERVICE**
ANMELDEVERFAHREN FÜR MULTIMEDIA-BROADCAST-MULTICAST-DIENST
PROCEDE D'ENREGISTREMENT POUR SERVICE DE DIFFUSION MULTIDIFFUSION MULTIMEDIA

(30) Priority: 08.01.2004 CN 200410000170
(43) Date of publication of application: 20.09.2006
(73) Proprietor: Huawei Technologies Co., Ltd., Longgang District, Shenzhen Guangdong 518129 (CN)
(72) Inventor: Zhang, Hai, Shenzhen, Guangdong 518129 (CN)
(74) Representative: Thun, Clemens
(86) International application number: PCT/CN2005/000025
(87) International publication number: WO 2005/069646

(56) References cited:
- EP-A- 1 353 523
- EP-A1- 1 359 774
- CN-A- 1 457 165
- CN-A- 1 463 103
- "3rdGPP TS 23.246 V.6.1.0 (2003-12) - 3rd GENERATION PARTERSHIP PROJECT" 3RD GENERATION PARTNERSHIP PROJECT (3GPP); TECHNICAL SPECIFICATION (TS), XX, XX, vol. 23.246, no. V610, December 2003 (2003-12), XP002987331

## Description

### Field of the Technology

The present invention relates to Multimedia Broadcast/Multicast service, and more particularly, to a method for Multimedia Broadcast/Multicast Service Registration.

### Background of the Invention

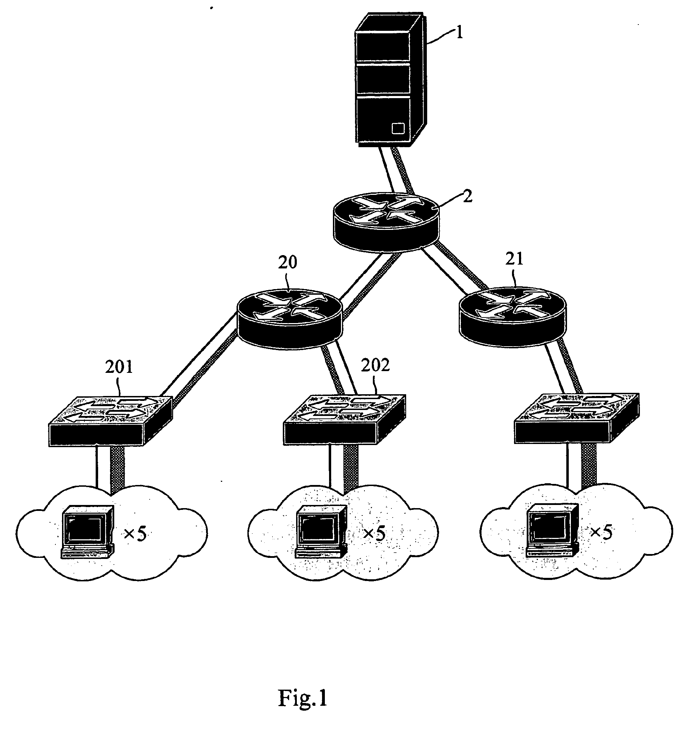

Development of the 3^{rd} Generation Mobile Communication Technology makes it possible to provide services with a higher data transfer speed than the 2^{nd} Generation Mobile Communication does, and further support many new services, such as video telephone, downloading pictures and high speed Internet browsing etc. Wherein, some services have following common features: it is possible to send corresponding data simultaneously to all subscribers who have customized the service in radio network, for instance, sending weather forecast, short newsreel and sports performance collection etc. Based on the feature that data of these services can be sent simultaneously, the 3^{rd} Generation Mobile Communication introduces the concept of Multicast/Broadcast. Multicast refers to a source node forwards data a downstream node in single path, and then this downstream node replicates the data into several copies according to the number of its downstream nodes that need to receive the data, and further allocates the data to these downstream nodes, in this way, the nodes which received the data further replicate and distribute the data. Broadcast refers to a source node sends data to all downstream nodes. Transmission mechanism in Multicast mode is shown in Figure 1, Node 1 is the source node, it sends data to its downstream Node 2; after receiving the data, Node 2 duplicates the said data and allocates to its downstream Nodes 20 and 21; after receiving the data, Node 20 duplicates the data and further allocates the copies to its downstream Nodes 201 and 202, and on the rest may be deduced by analogy.

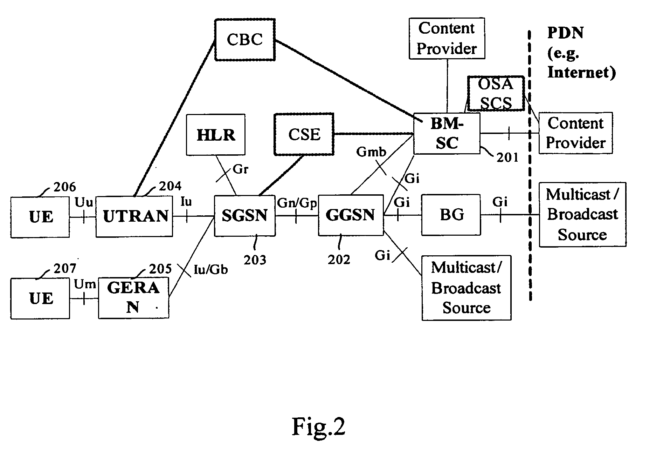

Figure 2 is a schematic diagram illustrating architecture of radio network which supports Multicast/Broadcast service. As shown in Figure 2, in the 3^{rd} Generation Partnership Project (3GPP) frame, the network architecture of the radio network which supports Multicast/Broadcast service is: Broadcast-Multicast Service Center (BM-SC) 201 connects with Gateway GPRS Support Node (GGSN) 202 through Gmb interface or Gi interface, where one BM-SC 201 can connect with several GGSN 202; GGSN 202 connects with Serving GPRS Support Node (SGSN) 203 through Gn/Gp interface, where one GGSN 202 can connect with several SGSN 203; SGSN 203 can connect with Universal Terrestrial Radio Access Network (UTRAN) 204 of Universal Mobile Telecommunication System (UMTS) via Iu interface; UTRAN 204 connects with User Equipment (UE) 206 through Uu interface, SGSN 203 can also connect with GSM/EDGE Radio Access Network (GERAN) 205 in Global System of Mobile communication (GSM) via Iu/Gb interface; GERAN 205 connects with UE 207 via Um interface.

Benefits of adopting Broadcast and Multicast to transmit data are as follows: Broadcast and Multicast data can be transmitted only once in each link of radio communication network. For instance, a SGSN sends data to a Radio Network Controller (RNC) only once, no matter how many Base Stations (Node B) and UEs expect to receive these data. In this way, when the UEs which have registered for a particular Multicast/Broadcast service belong to a same cell, it is possible to send data to these UEs simultaneously through a Downlink Shared Channel, avoiding creating separate radio channel for each UE, such that reduces occupation of radio resources, thereby avoiding jamming radio interface with identical data, and further effectively increasing the capacity of radio interface.

Just because of many benefits of adopting Broadcast and Multicast in data delivery, Multimedia Broadcast/Multicast Service (MBMS) has rapidly developed and become widespread in the 3^{rd} Generation Mobile Communication system. The architecture of radio network in MBMS bearer service is identical with that shown in Figure 2.

In radio communication network, MBMS Registration refers to the procedure by which a downstream node informs an upstream node that it would like to receive session attributes and data which will be further distributed to downstream nodes of a particular MBMS bearer service. This procedure builds up a distribution tree for the delivery of MBMS session attributes and data from the BM-SC to the UEs which are interested in the service, further results in the set-up of a corresponding MBMS Bearer Context along the nodes of the distribution tree, but it does not result in the establishment of a bearer plane which will be established by a Session Start procedure.

MBMS Bearer Context includes all information for describing a particular MBMS bearer service and is created in each node involved in the delivery of the MBMS data. MBMS Bearer Context comprises two states: "Active" and "Standby". Wherein, "Active" reflects the state that bearer plane resources are required in the network for the transfer of the MBMS data, "Active" state is corresponding to the ongoing MBMS session. While "Standby" reflects the state of an MBMS Bearer Context in which bearer plane resources are not required in the network for the transfer of the MBMS data. This state is maintained as long as there is no ongoing corresponding MBMS session.

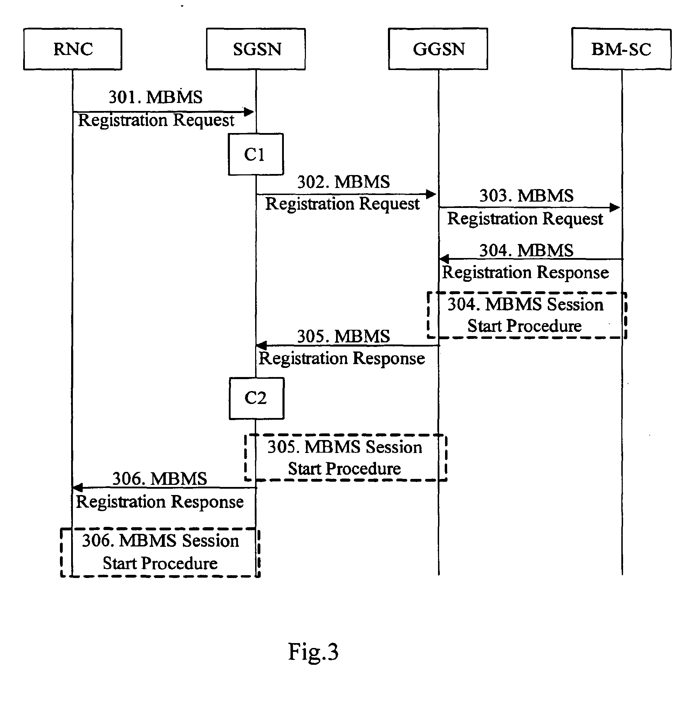

As shown in Figure 3, the implementation of MBMS Registration procedure in prior art is as follows:
Step 301: When a drift RNC (DRNC) detects that the UE which is hosted by itself is interested in a particular MBMS bearer service, the DRNC sends an MBMS Registration Request to its parent SGSN if the registration has not been already done.

Step C1 and Step 302: If the SGSN has no MBMS Bearer Context for the MBMS bearer service and the SGSN receives an MBMS Registration Request from the DRNC for the MBMS bearer service; or if a first MBMS UE Context has been created in the SGSN for the MBMS bearer service, however the SGSN has no corresponding MBMS Bearer Context, the SGSN creates an MBMS Bearer Context (in "Standby" state) and sends an MBMS Registration Request which includes IP multicast address and APN to the GGSN. Here, the SGSN creates an MBMS Bearer Context. However, this MBMS Bearer Context does not comprise some information, such as TMGI, Required MBMS Bearer Capabilities etc.

Step 303: If the GGSN has no MBMS Bearer Context for the MBMS bearer service, and the GGSN receives an MBMS Registration Request from the SGSN for the MBMS bearer service, or if a first MBMS UE Context has been created in the GGSN for the MBMS bearer service, however the GGSN has no MBMS Bearer Context, the GGSN sends an MBMS Registration Request which includes IP multicast address and APN to a BM-SC.

Step 304: Upon reception of the MBMS Registration Request from the GGSN, the BM-SC adds the identifier of the GGSN to the "List of downstream nodes" parameter in its MBMS Bearer Context, and responds with an MBMS Registration Response which includes parameters such as TMGI, Required MBMS Bearer Capabilities etc. If the MBMS Bearer Context of the BM-SC is in "Active" state, the BM-SC will initiate a Session Start procedure with the GGSN.

Step 305 and Step C2: If the GGSN receives an MBMS Registration Request from the SGSN in Step 302, the GGSN adds the identifier of the SGSN to the "List of downstream nodes" parameter in its MBMS Bearer Context, and responds to the SGSN with MBMS Registration Response which includes parameters such as TMGI, Required MBMS Bearer Capabilities etc. If the MBMS Bearer Context is in "Active" state, the GGSN will initiate the Session Start procedure with the SGSN. Wherein, after receiving MBMS Registration Response from the GGSN, the SGSN fills TMGI, Required MBMS Bearer Capabilities parameters etc. therein according to the information included in the message, finishes creation of the MBMS Bearer Context for the MBMS bear service in the SGSN.

Step 306: If the SGSN receives the MBMS Registration Request from the DRNC, the SGSN adds the identifier of the DRNC to the "List of downstream nodes" parameter of its MBMS Bearer Context, and responds with an MBMS Registration Response. If the MBMS Bearer Context is in "Active" state, the SGSN will initiate the Session Start procedure with the DRNC.

In view of the above description, there is no corresponding MBMS Bearer Context having been created in the GGSN during the MBMS Registration procedure in prior art. In MBMS, if no corresponding MBMS Bearer Context has been created in the GGSN, it is impossible to establish continuous distribution tree, which is started from a BM-SC, ended at the service related UEs, and can send session attributes and data of the MBMS bearer service. Therefore, no MBMS bearer service will be implemented.

Moreover, the above procedure does not specify a clear time that initiates a session between an upstream node and a downstream node when the upstream node has service. Therefore, if the upstream node initiates a session before the downstream node having finished creation of the MBMS Bearer Context therein, errors will occur and MBMS bearer service will be implemented normally.

In the document 3GPP TS 23.246 V.6.1.0 (2003-12) MBMS, Architecture and functional description (Release 6), a MBMS Registration Procedure is disclosed. In the known procedure, a MBMS Bearer Context is created in GGSN when downstream nodes request it.

### Summary of the Invention

It is an object to provide a method for Multimedia Broadcast/Multicast service registration in order to enable the MBMS to be implemented normally.

To attain the above object, the solution in accordance with this invention is implemented as defined in independent method claim 1.

In the Step A, when responding with the MBMS Registration Response comprising information of the BM-SC's MBMS Bearer Context, if the BM-SC's MBMS Bearer Context is in "Active" state, the method further comprising:
the BM-SC waiting for a preset period of time, and initiating a Session Start procedure with the GGSN after the preset period of time.

If a first MBMS UE Context has been created in the GGSN for the MBMS bearer service, before implementing Step A, the method further comprising:
the GGSN detecting whether it has created the MBMS Bearer Context for the MBMS bearer service, if not, the GGSN sending an MBMS Registration Request comprising IP multicast address and Access Point Name (APN) to the BM-SC, and going to Step A, or else, jumping out of the procedure.

Before implementing Step A, the method further comprising:
A1. the Serving GPRS Support Node (SGSN) creating an MBMS Bearer Context which is in "Standby" state, and sending an MBMS Registration Request comprising IP multicast address and APN to the GGSN;
A2. upon reception of the MBMS registration, the GGSN detecting whether there is an MBMS Bearer Context for the MBMS bearer service in the GGSN; if not, sending an MBMS Registration Request comprising IP multicast address and APN to the BM-SC, and going to Step A, or else, jumping out of the procedure.

When a drift Radio Network Controller (DRNC) detecting that a UE hosted by itself is interested in the MBMS bearer service, and the DRNC has not registered for the MBMS bearer service, before implementing Step A1, the method further comprising:
A11. the DRNC sending an MBMS Registration Request to its parent SGSN;
A12. upon reception of the MBMS Registration Request, the SGSN detecting whether there is an MBMS Bearer Context for the MBMS bearer service, if not, going to Step A1, or else, jumping out of the procedure.

If a first MBMS UE Context has been created in the SGSN for the MBMS bearer service, before implementing Step A1, the method further comprising:
detecting whether an MBMS Bearer Context has been created in the SGSN for the MBMS bearer service, if not, going to Step A1, or else, jumping out of the procedure.

After implementing Step B, the method further comprising:
B1. the GGSN adding the identifier of the SGSN to a "List of downstream nodes" parameter in the MBMS Bearer Context and responding with an MBMS Registration Response comprising TMGI, Required Bearer Capabilities parameters to the SGSN;
B2. upon reception of the parameters from the GGSN, the SGSN filling TMGI, Required Bearer Capabilities according to the information comprised in the received MBMS Registration Response message, and finishing creation of the MBMS Bearer Context for the MBMS bearer service in the SGSN.

If the MBMS Bearer Context is in "Active" state while responding with the MBMS Registration Response message to the SGSN in Step B1, the method further comprising:
the GGSN waiting for a preset period of time, and initiating Session Start procedure with the SGSN.

When the SGSN receiving MBMS Registration Request from the DRNC and after implementing Step B2, the method further comprising:
B21. the SGSN adding the identifier of the DRNC to a "List of downstream nodes" parameter of the MBMS Bearer Context and responding with an MBMS Registration Response.

If the MBMS Bearer Context is in "Active" state while responding with an MBMS Registration Response message in Step B21, the method further comprising:
the SGSN waiting for a preset period of time, and initiating Session Start procedure with the DRNC.

Before implementing Step A, the method further comprising:
A0. the GGSN determining IP multicast address and APN, creating an MBMS Bearer Context based on the determined IP multicast address and APN, and setting it in "Standby" state;
the Step B further comprising:
   the GGSN filling the MBMS Bearer Context based on the TMGI, Required Bearer Capabilities parameters which is comprised in the received MBMS Registration Response message, finishing creation of the MBMS Bearer Context.

The Step B further comprising:
the GGSN determining IP multicast address and APN, creating a full MBMS Bearer Context based on the determined IP multicast address and APN, as well as TMGI, Required Bearer Capabilities parameters in the response message.

### Brief Description of the Drawings

Figure 1 is a schematic diagram illustrating transmission mechanism in Multicast mode;
Figure 2 is a schematic diagram illustrating architecture of radio network that supports Multicast/Broadcast service;
Figure 3 is a schematic flowchart illustrating MBMS Registration procedure in the prior art;
Figure 4 is a schematic flowchart illustrating implementing MBMS Registration procedure in accordance with a first embodiment of the present invention;
Figure 5 is a schematic flowchart illustrating implementing MBMS Registration procedure in accordance with a second embodiment of the present invention.

### Embodiments of the Invention

The present invention creates an MBMS Bearer Context in a GGSN when the GGSN has initiated MBMS Registration Request, thereby ensuring normal implementing of an MBMS bearer service.

It should be clear that, according to the MBMS Registration procedure in prior art, the BM-SC saves the MBMS Bearer Context information, which includes IP multicast address, APN, TMGI, State, Required MBMS Bearer Capabilities, QoS, MBMS Service Area, List of downstream nodes and number of UEs. As shown in Table 1, IP multicast address is for identifying the MBMS bearer service which is described by the MBMS Bearer Context; APN refers to Access Point Name defined by this IP multicast address, TMGI refers to Temporary Mobile Group Identity allocated to the MBMS bearer service; State is the state of bearer plane resources, i.e., "Standby" or "Active" state; Required MBMS Bearer Capabilities refers to minimum bearer capabilities that the UE needs to support; QoS means Quality of Service which is required for the MBMS bearer service; MBMS Service Area is the area over which the MBMS bearer service has to be distributed.; List of downstream nodes refers to the List of downstream nodes that have Required the MBMS bearer service and to which notifications and MBMS data have to be forwarded; and number of UEs means the number of UEs hosted by the node that have joined the MBMS bearer service. Wherein, "X" indicates the parameter that needs to be saved in corresponding nodes.

**Table 1**

| Parameter | Description | RAN | SGSN | GGSN | BM-SC |
|---|---|---|---|---|---|
| IP multicast address | IP multicast address identifying the MBMS bearer described by this MBMS Bearer Context. | X | X | X | X |
| APN | Access Point Name on which this IP multicast address is defined. | X | X | X | Undetermined |
| TMGI | Temporary Mobile Group Identity allocated to the MBMS bearer service. | X | X | X | X |
| State | State of bearer plane resources ("Standby" | Undetermined | X | X | X |
| Required MBMS Bearer Capabilities | Minimum bearer capabilities the UE needs to support | | X | X | X |
| QoS | Quality of Service required for the MBMS bearer service. | X | X | X | X |
| MBMS Service Area | Area over which the MBMS bearer service has to be distributed. | X | X | X | X |
| List of downstream nodes | List of downstream nodes that have requested the MBMS bearer service and to which notifications and MBMS data have to be forwarded. | | X | X | X |
| Number of UEs | Number of UEs hosted by the node that have joined the MBMS bearer service. | Undetermined | X | X | Undetermined |

After the UE initiating MBMS Registration Request which includes IP multicast address and APN, the IP multicast address and APN associated with the UE will be recorded in each node that the request passed. Therefore, after receiving the MBMS Registration Request from the downstream node, i.e. the SGSN, the GGSN will also possess the IP multicast address and APN. Moreover, if the first MBMS UE Context has been created in the corresponding node for the MBMS bearer service, however the node has no MBMS Bearer Context, it will also possess the IP multicast address and APN at this time. In this instance, it is necessary for the GGSN to initiate MBMS Registration Request, and obtain TMGI and Required MBMS Bearer Capabilities from the BM-SC based on the IP multicast address and APN. Because of the IP multicast address and APN that the GGSN can obtain by itself, the GGSN can adopt the following method to create the MBMS Bearer Context.

One preferred method according to the present invention now is described as follows. Upon receiving the MBMS Registration Response from the BM-SC, the GGSN creates a full MBMS Bearer Context, thereby finishing the creation of an MBMS Bearer Context function at GGSN during MBMS Registration procedure. If the MBMS Bearer Context in the upstream node that received MBMS Registration Request is in "Active" state, the upstream node will initiate Session Start procedure after a preset period of time when it finishes responding with the MBMS Registration Response.

Another preferred method according to the present invention will be described as follows. MBMS Bearer Context creation process in the GGSN will be divided into two steps. The first step is that, the GGSN creates MBMS Bearer Context according to the IP multicast address and APN before receiving the MBMS Registration Response. The second step is that, after receiving the MBMS Registration Response, the GGSN will go on with creation of the MBMS Bearer Context based on the TMGI, Required MBMS Bearer Capabilities parameters etc. in the response message.

The invention is hereinafter described in detail with reference to the accompanying drawings and exemplary embodiments so that the object, solution, and merits thereof could be made more apparent.

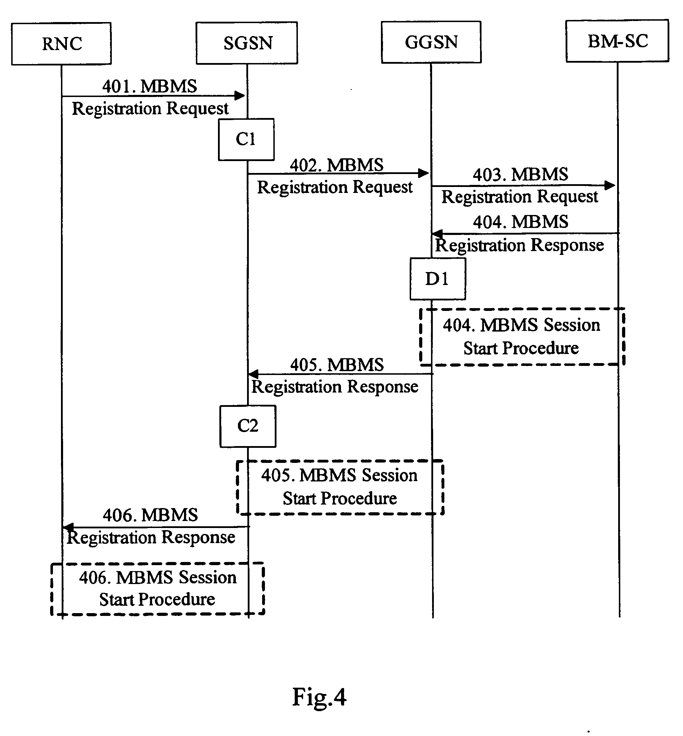

Now referring to Figure 4, the method for implementing the present invention includes following steps:
Step 401 and Step C1: When a DRNC detects that a UE which is hosted by itself is interested in a particular MBMS bear service, the DRNC sends an MBMS Registration Request to its parent SGSN if the registration has not been already done. The MBMS Registration Request includes parameters for identifying the MBMS bearer service, i.e. IP multicast address and APN.

Step 402: If the SGSN has no MBMS Bearer Context for the MBMS bearer service, and the SGSN receives the MBMS Registration Request from the DRNC, or if a first MBMS UE Context has been created in the SGSN for the MBMS bearer service, however the SGSN has no corresponding MBMS Bearer Context, the SGSN creates an MBMS Bearer Context (in "Standby" state) based on the MBMS Registration Request or IP multicast address and APN included in the MBMS UE Context and sends an MBMS Registration Request which includes IP multicast address and APN to the GGSN. However, this MBMS Bearer Context does not include some information, such as TMGI, Required MBMS Bearer Capabilities etc.

Step 403: If the GGSN has no MBMS Bearer Context for the MBMS bearer service, and the GGSN receives the MBMS Registration Request from the SGSN for this MBMS bearer service, or if a first MBMS UE Context has been created in the GGSN for the MBMS bearer service, however the GGSN has no MBMS Bearer Context, the GGSN sends an MBMS Registration Request which includes IP multicast address and APN to the BM-SC.

Step 404 and Step D1: Upon reception of an MBMS Registration Request from the GGSN, the BM-SC adds the identifier of the GGSN to the "List of downstream nodes" parameter in its MBMS Bearer Context, and responds with an MBMS Registration Response, which includes parameters such as TMGI, Required MBMS Bearer Capabilities etc. After receiving the MBMS Registration Response, the GGSN creates the MBMS Bearer Context (in "Standby" state) based on the MBMS Bearer Context information included in the response message. If MBMS Bearer Context of the BM-SC is in "Active" state while the BM-SC responding with the response message, the BM-SC will initiate Session Start procedure with the GGSN after a preset period of time, thereby ensuring the GGSN to complete creation of the MBMS Bearer Context.

Step 405: If the GGSN receives the MBMS Registration Request from the SGSN in Step 402, the GGSN adds identifier of the SGSN to the "List of downstream nodes" parameter in its MBMS Bearer Context, and responds to the SGSN with an MBMS Registration Response which includes parameters such as TMGI, Required MBMS Bearer Capabilities etc.; after receiving the MBMS Registration Response from the GGSN, the SGSN fills TMGI, Required MBMS Bearer Capabilities parameters etc., based on the information included in the response message and completes creation of the MBMS Bearer Context for the MBMS bearer service in the SGSN. If the MBMS Bearer Context is in "Active" state while the GGSN responding with the response message, the GGSN will initiate Session Start procedure with the SGSN after a preset period of time, thereby ensuring the SGSN to complete creation of the MBMS Bearer Context.

Step 406: If the SGSN receives the MBMS Registration Request from the DRNC, the SGSN adds the identifier of the DRNC to the "List of downstream nodes" parameter of the MBMS Bearer Context, and responds with an MBMS Registration Response. If the MBMS Bearer Context is in "Active" state while the SGSN responding with response message, the SGSN will initiate Session Start procedure with the DRNC after a preset period of time, thereby ensuring the DRNC to complete creation of the MBMS Bearer Context.

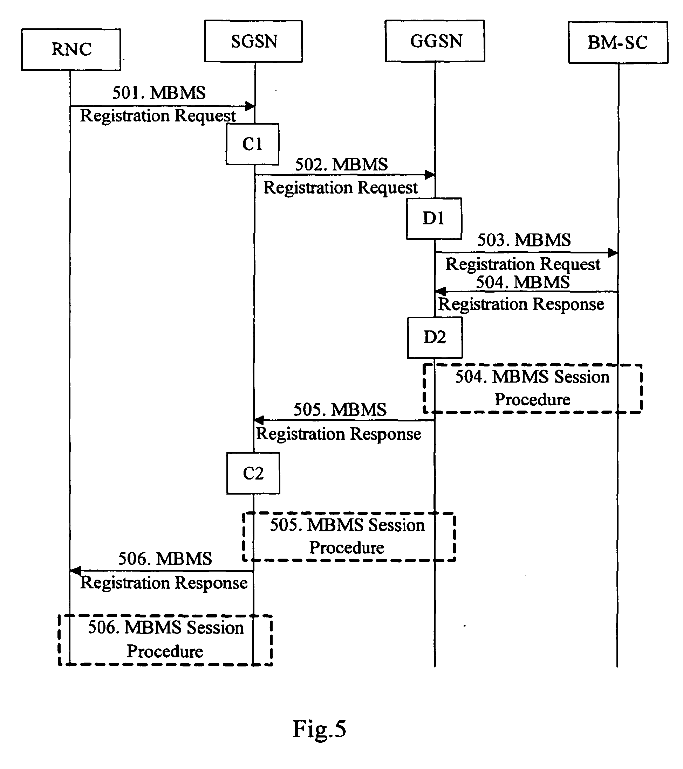

Now referring to Figure 5, the invention will be described in more detail hereinafter.

Step 501: When a DRNC detects that a UE which is hosted by itself is interested in the MBMS bearer service, the DRNC sends an MBMS Registration Request to its parent SGSN if the registration has not been already done. The MBMS Registration Request includes parameters for identifying the MBMS bearer service, i.e., IP multicast address and APN.

Step 502 and Step C1: If the SGSN has no MBMS Bearer Context for the MBMS bearer service, and the SGSN receives the MBMS Registration Request from the DRNC, or if a first MBMS UE Context has been created in the SGSN for the MBMS bearer service, however the SGSN has no corresponding MBMS Bearer Context, the SGSN creates an MBMS Bearer Context (in "Standby" state) based on the MBMS Registration Request or IP multicast address and APN included in the MBMS UE context and send an MBMS Registration Request which includes IP multicast address and APN to the GGSN. However, this MBMS Bearer Context does not include some information, such as TMGI, Required MBMS Bearer Capabilities etc.

Step 503 and Step D1: If the GGSN has no MBMS Bearer Context for the MBMS bearer service, and the GGSN receives the MBMS Registration Request from SGSN for the MBMS bearer service, or if a first MBMS UE Context has been created in the GGSN for the MBMS bearer service, however the GGSN has no MBMS Bearer Context, the GGSN creates an MBMS Bearer Context (in "Standby" state) based on the MBMS Registration Request or IP multicast address and APN included in the MBMS UE Context and sends an MBMS Registration Request which includes IP multicast address and APN to the BM-SC. However, this MBMS Bearer Context does not include some information, such as TMGI, Required MBMS Bearer Capabilities etc.

Step 504 and Step D2: Upon reception of the MBMS Registration Request from GGSN, the BM-SC adds an identifier of the GGSN to the "List of downstream nodes" parameter in its MBMS Bearer Context, and responds with an MBMS Registration Response, which includes parameters such as TMGI, Required MBMS Bearer Capabilities etc. After receiving MBMS Registration Response from the BM-SC, the GGSN fills TMGI, Required MBMS Bearer Capabilities parameters etc. according to the information included in the response message, finishes creation of the MBMS Bearer Context for the MBMS bear service in the GGSN. If MBMS Bearer Context of the BM-SC is in "Active" state while the BM-SC responding with the response message, the BM-SC will initiate Session Start procedure with the GGSN after a preset period of time, thereby ensuring the GGSN to finish creation of the MBMS Bearer Context.

Step 505 and Step C2: If the GGSN receives the MBMS Registration Request from the SGSN in Step 502, the GGSN adds identifier of the SGSN to the "List of downstream nodes" parameter in its MBMS Bearer Context, and responds to the SGSN with an MBMS Registration Response which includes parameters such as TMGI, Required MBMS Bearer Capabilities etc.; after receiving the MBMS Registration Response from the GGSN, the SGSN fills TMGI, Required MBMS Bearer Capabilities etc. according to the information included in the response message, finishes creation of the MBMS Bearer Context for the MBMS bearer service in the SGSN. If the MBMS Bearer Context is in "Active" state while the GGSN responding with the response message, the GGSN will initiate Session Start procedure with the SGSN after a preset period of time, thereby ensuring the SGSN to finish creation of the MBMS Bearer Context.

Step 506: If the SGSN receives the MBMS Registration Request from the DRNC, the SGSN adds the identifier of the DRNC to the "List of downstream nodes" parameter of the MBMS Bearer Context, and responds with an MBMS Registration Response; if the MBMS Bearer Context is in "Active" state while the SGSN responding with the response message, the SGSN will initiate Session Start procedure with the DRNC after a preset period of time, thereby ensuring the DRNC to finish creation of the MBMS Bearer Context.

In above procedure, the completion of MBMS Bearer Context creating process is divided into steps D1 and D2. Wherein, the procedure of Step D1 is that: GGSN creates an MBMS Bearer Context. However, this MBMS Bearer Context does not include some information, such as TMGI, Required MBMS Bearer Capabilities etc.; the procedure of Step D2 is that:
the GGSN receives an MBMS Registration Response from the BM-SC, and fills TMGI, Required Bearer Capabilities parameters etc. according to the information included in the response message, finishes creation of the MBMS Bearer Context for the MBMS bear service in the GGSN.

## Claims

1. A method for Multimedia Broadcast/ Multicast Service, MBMS, Registration, comprising the steps of:
A. upon reception of an MBMS Registration Request message (403, 503) from a Gateway GPRS Support Node, GGSN, a Broadcast/Multicast Service Center, BM-SC, adding an identifier of the GGSN to a BM-SC's MBMS Bearer Context, and responding the GGSN with an MBMS Registration Response message (404, 504) comprising information of the BM-SC's MBMS Bearer Context;
**characterized in that**,
B. upon reception of the MBMS Registration Response message (404) the GGSN creating an MBMS Bearer Context (D1) based on the information of the BM-SC's MBMS Bearer Context which is comprised in the received MBMS Registration Response message (404); or
the GGSN creating an MBMS Bearer Context (D1) without a Temporary Mobile Group Identity, TMGI, and Required Bearer Capabilities parameters before the GGSN sending the MBMS Registration Request to the BM-SC (503), and the GGSN fitting the TMGI and the Required Bearer Capabilities parameters in the MBMS Bearer Context (D2) when the GGSN receiving the MBMS Registration Response message (504) from the BM-SC.

2. The method according to claim 1, wherein in the Step A, when responding with the MBMS Registration Response message comprising information of the BM-SC's MBMS Bearer Context, if the BM-SC's MBMS Bearer Context is in "Active" state, the method further comprising:
the BM-SC waiting for a preset period of time, and initiating a Session Start procedure with the GGSN after the preset period of time.

3. The method according to claim 1, wherein if a first MBMS UE Context has been created in the GGSN for an MBMS bearer service, before implementing Step A, the method further comprising:
the GGSN detecting whether it has created the MBMS Bearer Context for the MBMS bearer service, if not, the GGSN sending an MBMS Registration Request comprising IP multicast address and Access Point Name, APN, to the BM-SC, and going to Step A, or else, jumping out of the procedure.

4. The method according to claim 1, before implementing Step A, the method further comprising:
A1. a Serving GPRS Support Node, SGSN, creating an MBMS Bearer Context which is in "Standby" state, and sending an MBMS Registration Request comprising IP multicast address and APN to the GGSN;
A2. upon reception of the MBMS Registration Request message, the GGSN detecting whether there is an MBMS Bearer Context for an MBMS bearer service in the GGSN; if not, sending an MBMS Registration Request message comprising the received IP multicast address and APN to the BM-SC, and going to Step A, or else, jumping out of the procedure.

5. The method according to claim 4, when a drift Radio Network Controller, DRNC, detecting that a UE hosted by itself is interested in the MBMS bearer service, and the DRNC has not registered for the MBMS bearer service, before implementing Step A1, the method further comprising:
A11. the DRNC sending an MBMS Registration Request to its parent SGSN;
A12. upon reception of the MBMS Registration Request message, the SGSN detecting whether there is an MBMS Bearer Context for the MBMS bearer service, if not, going to Step A1, or else, jumping out of the procedure.

6. The method according to claim 4, wherein if a first MBMS UE Context has been created in the SGSN for the MBMS bearer service, before implementing Step A1, the method further comprising:
detecting whether an MBMS Bearer Context has been created in the SGSN for the MBMS bearer service, if not, going to Step A1, or else, jumping out of the procedure.

7. The method according to claim 4, after implementing Step B, the method further comprising:
B1. the GGSN adding the identifier of the SGSN to a "List of downstream nodes" parameter in the MBMS Bearer Context and responding with an MBMS Registration Response message comprising TMGI, Required Bearer Capabilities parameters to the SGSN;
B2. upon reception of the parameters from the GGSN, the SGSN filling the TMGI, the Required Bearer Capabilities parameters according to the information comprised in the received MBMS Registration Response message, and finishing creation of the MBMS Bearer Context for the MBMS bearer service in the SGSN.

8. The method according to claim 7, wherein if the MBMS Bearer Context is in "Active" state while responding with the MBMS Registration Response to the SGSN in Step B1, the method further comprising:
the GGSN waiting for a preset period of time, and initiating a Session Start procedure with the SGSN after the preset period of time.

9. The method according to claim 7, when the SGSN receiving MBMS Registration Request from a DRNC and after implementing Step B2, the method further comprising:
B21. the SGSN adding the identifier of the DRNC to a "List of downstream nodes" parameter of the MBMS Bearer Context and responding the DRNC with an MBMS Registration Response message.

10. The method according to claim 9, wherein if the MBMS Bearer Context is in "Active" state while responding with an MBMS Registration Response message in Step B21, the method further comprising:
the SGSN waiting for a preset period of time, and initiating a Session Start procedure with the DRNC after the preset period of time.

11. The method according to claim 1, wherein the GGSN creating the MBMS Bearer Context without the TMGI and the Required Bearer Capabilities parameters before the GGSN sending the MBMS Registration Request to the BM-SC further comprises:
A0. the GGSN determining an IP multicast address and an Access Point Name, APN, creating the MBMS Bearer Context without the TMGI and the Required Bearer Capabilities parameters based on the determined IP multicast address and APN, and setting it in "Standby" state.

12. The method according to claim 1, wherein the GGSN creating the MBMS Bearer Context further comprises:
the GGSN determining an IP multicast address and an APN, creating the MBMS Bearer Context based on the determined IP multicast address and the APN, as well as a TMGI and Required Bearer Capabilities parameters in the received MBMS Registration Response message.

## Patentansprüche

1. Verfahren zur Registration des Multimedia Broadcast/Multicast Service MBMS, mit den folgenden Schritten:
A. beim Empfang einer Nachricht MBMS Registration Request (403, 503) von einem Gateway GPRS Support Node GGSN fügt ein Broadcast/Multicast Service Center BM-SC eine Kennung des GGSN zu einem MBMS Bearer Context des BM-SC hinzu und antwortet dem GGSN mit einer Nachricht MBMS Registration Response (404, 504), die Informationen des MBMS Bearer Context des BM-SC umfasst;
**dadurch gekennzeichnet, dass**
B. beim Empfang der Nachricht MBMS Registration Response (404) der GGSN auf der Basis der Informationen des MBMS Bearer Context des BM-SC, der in der empfangenen Nachricht MBMS Registration Response (404) enthalten ist, einen MBMS Bearer Context (D1) erzeugt; oder
der GGSN einen MBMS Bearer Context (D1) ohne Temporary Mobile Group Identity TMGI und Parameter der Required Bearer Capabilities erzeugt, bevor der GGSN die MBMS Registration Request zu dem BM-SC sendet (503), und der GGSN die TMGI und die Parameter der Required Bearer Capabilities in den MBMS Bearer Context (D2) einträgt, wenn der GGSN die Nachricht MBMS Registration Response (504) von dem BM-SC empfängt.

2. Verfahren nach Anspruch 1, wobei im Schritt A beim Antworten mit der Nachricht MBMS Registration Response, die Informationen des MBMS Bearer Context des BM-SC umfasst, wenn sich der MBMS Bearer Context des BM-SC im Zustand "Active" befindet, das Verfahren ferner Folgendes umfasst:
das BM-SC wartet für einen voreingestellten Zeitraum und leitet nach dem voreingestellten Zeitraum eine Prozedur Session Start mit dem GGSN ein.

3. Verfahren nach Anspruch 1, wobei, wenn ein erster MBMS UE Context in dem GGSN für einen MBMS-Trägerdienst erzeugt wurde, das Verfahren vor dem Implementieren von Schritt A ferner Folgendes umfasst:
der GGSN detektiert, ob er den MBMS Bearer Context für den MBMS-Trägerdienst erzeugt hat, wenn nicht, sendet der GGSN eine MBMS Registration Request, die eine IP-Multicast-Adresse und einen Access Point Name APN umfasst, zu dem BM-SC und geht zum Schritt A oder springt andernfalls aus der Prozedur heraus.

4. Verfahren nach Anspruch 1, wobei das Verfahren vor dem Implementieren von Schritt A ferner Folgendes umfasst:
A1. ein Serving GPRS Support Node SGSN erzeugt einen MBMS Bearer Context, der sich im Zustand "Standby" befindet, und sendet eine MBMS Registration Request, die die IP-Multicast-Adresse und den APN umfasst, zu dem GGSN;
A2. beim Empfang der Nachricht MBMS Registration Request detektiert der GGSN, ob sich ein MBMS Bearer Context für einen MBMS-Trägerdienst in dem GGSN befindet; wenn nicht, Senden einer Nachricht MBMS Registration Request, die die empfangene IP-Multicast-Adresse und den APN umfasst, zu dem BM-SC und Gehen zum Schritt A oder andernfalls Herausspringen aus der Prozedur.

5. Verfahren nach Anspruch 4, wobei, wenn ein Drift Radio Network Controller DRNC detektiert, dass ein von ihm selbst gehostetes UE an dem MBMS-Trägerdienst interessiert ist, und sich der DRNC nicht für den MBMS-Trägerdienst registriert hat, das Verfahren vor dem Implementieren von Schritt A1 ferner Folgendes umfasst:
A11. der DRNC sendet eine MBMS Registration Request zu seinem übergeordneten SGSN;
A12. beim Empfang der Nachricht MBMS Registration Request detektiert der SGSN, ob es einen MBMS Bearer Context für den MBMS-Trägerdienst gibt, wenn nicht, Gehen zu Schritt A1 oder andernfalls Herausspringen aus der Prozedur.

6. Verfahren nach Anspruch 4, wobei, wenn ein erster MBMS UE Context in dem SGSN für den MBMS-Trägerdienst erzeugt wurde, das Verfahren vor dem Implementieren von Schritt A1 ferner Folgendes umfasst:
Detektieren, ob ein MBMS Bearer Context in dem SGSN für den MBMS-Trägerdienst erzeugt wurde, wenn nicht, Gehen zu Schritt A1 oder andernfalls Herausspringen aus der Prozedur.

7. Verfahren nach Anspruch 4, wobei das Verfahren nach dem Implementieren von Schritt B ferner Folgendes umfasst:
B1. der GGSN fügt die Kennung des SGSN zu einem Parameter "Liste der Downstream-Knoten" in dem MBMS Bearer Context hinzu und antwortet dem SGSN mit einer Nachricht MBMS Registration Response, die TMGI und Parameter der Required Bearer Capabilities umfasst;
B2. beim Empfang der Parameter von dem GGSN trägt der SGSN die TMGI und die Parameter der Required Bearer Capabilities gemäß den in der empfangenen Nachricht MBMS Registration Response enthaltenen Informationen ein und beendet die Erzeugung des MBMS Bearer Context für den MBMS-Trägerdienst in dem SGSN.

8. Verfahren nach Anspruch 7, wobei, wenn sich der MBMS Bearer Context im Zustand "Active" befindet, während im Schritt B1 dem SGSN mit der MBMS Registration Response geantwortet wird, das Verfahren ferner Folgendes umfasst:
der GGSN wartet für einen voreingestellten Zeitraum und leitet nach dem voreingestellten Zeitraum eine Prozedur Session Start mit dem SGSN ein.

9. Verfahren nach Anspruch 7, wobei, wenn der SGSN die MBMS Registration Request von einem DRNC empfängt, und nach dem Implementieren von Schritt B2 das Verfahren ferner Folgendes umfasst:
B21. der SGSN fügt die Kennung des DRNC zu einem Parameter "Liste der Downstream-Knoten" des MBMS Bearer Context hinzu und antwortet dem DRNC mit einer Nachricht MBMS Registration Response.

10. Verfahren nach Anspruch 9, wobei, wenn sich der MBMS Bearer Context im Zustand "Active" befindet, während im Schritt B21 mit einer Nachricht MBMS Registration Response geantwortet wird, das Verfahren ferner Folgendes umfasst:
der SGSN wartet für einen voreingestellten Zeitraum und leitet nach dem voreingestellten Zeitraum eine Prozedur Session Start mit dem DRNC ein.

11. Verfahren nach Anspruch 1, wobei das Erzeugen des MBMS Bearer Context ohne die TMGI und die Parameter der Required Bearer Capabilities durch den GGSN, bevor der GGSN die MBMS Registration Request zu dem BM-SC sendet, ferner Folgendes umfasst:
A0. der GGSN bestimmt eine IP-Multicast-Adresse und einen Access Point Name APN, erzeugt den MBMS Bearer Context ohne die TMGI und die Parameter der Required Bearer Capabilities auf der Basis der bestimmten IP-Multicast-Adresse und des APN und setzt ihn in den Zustand "Standby".

12. Verfahren nach Anspruch 1, wobei das Erzeugen des MBMS Bearer Context durch den GGSN ferner Folgendes umfasst:
der GGSN bestimmt eine IP-Multicast-Adresse und einen APN, erzeugt auf der Basis der bestimmten IP-Multicast-Adresse und des APN einen MBMS Bearer Context sowie eine TMGI und Parameter der Required Bearer Capabilities in der empfangenen Nachricht MBMS Registration Response.

## Revendications

1. Procédé d'Enregistrement de Service de Diffusion Multimédia/Multidiffusion, MBMS, comprenant les étapes suivantes :
A. à la réception d'un message de Demande d'Enregistrement MBMS (403, 503) depuis un Centre de Service de Diffusion/Multidiffusion, BM-SC, d'un Noeud de Support Passerelle GPRS, l'ajout d'un identifiant du GGSN à un Contexte de Support MBMS du BM-SC, et la réponse au GGSN avec un message de Réponse d'Enregistrement MBMS (404, 504) comprenant des informations du Contexte de Support MBMS Reçu du BM-SC ;
**caractérisé en ce que**,
B. à la réception du message de Réponse d'Enregistrement MBMS (404), le GGSN crée un Contexte de Support MBMS (D1) basé sur les informations du Contexte de Support MBMS du BM-SC qui sont comprises dans le message de Réponse d'Enregistrement MBMS reçu (404) ; ou
le GGSN crée un Contexte de Support MBMS (D1) sans Identité de Groupe Mobile Temporaire, TMGI, et paramètres de Capabilités de Support Requises avant l'envoi par le GGSN de la Demande d'Enregistrement MBMS au BM-SC (503), et le GGSN remplit la TMGI et les paramètres de Capabilités de Support Requises dans le Contexte de Support MBMS (D2) quand le GGSN reçoit le message de Réponse d'Enregistrement MBMS (504) du BM-SC.

2. Procédé selon la revendication 1, dans lequel à l'Etape A, lors de la réponse avec le message de Réponse d'Enregistrement MBMS comprenant des informations du Contexte de Support MBMS du BM-SC, si le Contexte de Support MBMS du BM-SC est dans un état "actif", le procédé comprend en outre :
l'attente par le BM-SC durant une période de temps préétablie, et le lancement par celui-ci d'une procédure de Début de Session avec le GGSN après la période de temps préétablie.

3. Procédé selon la revendication 1, comprenant en outre si un premier Contexte UE MBMS a été créé dans le GGSN pour un service support MBMS, avant l'exécution de l'étape A:
le fait que le GGSN détecte s'il a créé ou non le Contexte de Support MBMS pour le service support MBMS; dans la négative, l'envoi par le GGSN d'une Demande d'Enregistrement MBMS comprenant une adresse de multidiffusion IP et un Nom de Point d'Accès, APN, au BM-SC, et son passage à l'Etape A, ou bien, son abandon de la procédure.

4. Procédé selon la revendication 1, comprenant en outre, avant l'exécution de l'Etape A
A1. la création, par un Noeud de Support GPRS de desserte, SGSN, d'un Contexte de Support MBMS qui se trouve dans un état de "veille", et l'envoi au SGSN d'une Demande d'Enregistrement MBMS comprenant une adresse de multidiffusion IP et un APN au GGSN ;
A2. à la réception du message de Demande d'Enregistrement MBMS, le fait que le GGSN détecte s'il existe ou non un Contexte de Support MBMS pour un service support MBMS dans le GGSN ; dans la négative, l'envoi par le GGSN d'un message de Demande d'Enregistrement MBMS comprenant l'adresse de multidiffusion IP et l'APN reçus au BM-SC, et son passage à l'Etape A, ou bien, son abandon de la procédure.

5. Procédé selon la revendication 4, comprenant en outre, quand un Contrôleur de Réseau Radio de dérive, DRNC, détecte qu'un UE qu'il héberge est intéressé par le service de support MBMS, et quand le DRNC ne s'est pas encore enregistré pour obtenir le service support MBMS, avant l'exécution de l'Etape A1 :
A11. l'envoi par le DRNC d'une Demande d'Enregistrement MBMS à son SGSN parent ;
A12. à la réception du message de Demande d'Enregistrement MBMS, le fait que le SGSN détecte s'il existe ou non un Contexte de Support MBMS pour le service support MBMS ; dans la négative, son passage à l'Etape A1, ou bien, son abandon de la procédure.

6. Procédé selon la revendication 4, comprenant en outre, si un premier Contexte UE MBMS a été créé dans le SGSN pour le service support MBMS, avant l'exécution de l'Etape A1 :
le fait de détecter si un Contexte de Support MBMS a été créé ou non dans le SGSN pour le service support MBMS ; dans la négative, le passage à l'Etape A1, ou bien, l'abandon de la procédure.

7. Procédé selon la revendication 4, comprenant en outre, après l'exécution de l'Etape B
B1. l'ajout par le GGSN de l'identifiant du SGSN à un paramètre de "Liste de noeuds aval" dans le Contexte de Support MBMS et la réponse avec un message de Réponse d'Enregistrement MBMS comprenant une TMGI, des paramètres de Capabilités de Support Requises au SGSN ;
B2. à la réception des paramètres depuis le GGSN, le remplissage par le SGSN de la TMGI, des paramètres de Capabilités de Support Requises en fonction des informations comprises dans le message de Réponse d'Enregistrement MBMS reçu, et l'achèvement par le GGSN de la création du Contexte de Support MBMS pour le service support MBMS dans le SGSN.

8. Procédé selon la revendication 7, comprenant en outre si le Contexte de Support MBMS se trouve dans un état "actif" lors de la réponse avec la Réponse d'Enregistrement MBMS au SGSN à l'Etape B1 :
l'attente par le GGSN pendant une période de temps préétablie, et le lancement par celui-ci d'une procédure de Début de Session avec le SGSN après la période de temps préétablie.

9. Procédé selon la revendication 7, comprenant en outre, quand le SGSN reçoit une Demande d'Enregistrement MBMS depuis un DRNC et après l'exécution de l'Etape B2 :
B21. l'ajout par le SGSN de l'identifiant du DRNC à un paramètre de "Liste de noeuds aval" du Contexte de Support MBMS et la réponse au DRNC avec un message de Réponse d'Enregistrement MBMS.

10. Procédé selon la revendication 9, comprenant en outre si le Contexte de Support MBMS se trouve dans un état "actif" lors de la réponse avec un Message de Réponse d'Enregistrement MBMS à l'Etape B21 :
l'attente par le SGSN pendant une période de temps préétablie, et le lancement par celui-ci d'une procédure de Début de Session avec le DRNC après la période de temps préétablie.

11. Procédé selon la revendication 1, dans lequel la création par le GGSN du Contexte de Support MBMS sans la TMGI, et les paramètres de Capabilités de Support Requises avant l'envoi par le GGSN de la Demande d'Enregistrement MBMS au BM-SC comprend en outre :
A0. la détermination par le GGSN d'une adresse de multidiffusion IP et d'un Nom de Point d'Accès, APN, la création par le GGSN du Contexte de Support MBMS sans la TMGI et les paramètres de Capabilités de Support Requises en fonction de l'adresse de multidiffusion IP et de l'APN déterminés, et le réglage par le GGSN du Contexte de Support MBMS sur l'état "actif".

12. Procédé selon la revendication 1, dans lequel la création par le GGSN du Contexte de Support MBMS comprend en outre :
la détermination par le GGSN d'une adresse de multidiffusion IP et d'un APN, la création par le GGSN du Contexte de Support MBMS en fonction de l'adresse de multidiffusion IP et l'APN déterminés, ainsi que d'une TMGI et de paramètres de Capabilités de Support Requises dans le message de Réponse d'Enregistrement MBMS reçu.
